# DEMANDE DE BREVET EUROPEEN

(11) **EP 1 712 269 A1**
(43) Date de publication de la demande: **18.10.2006**
(21) Numéro de dépôt: 06290553.4
(22) Date de dépôt: 05.04.2006
(51) Int. Cl.: B01D 53/14, B01D 53/68

(54) **Procédé de lavage d'un flux de gaz contenant du chlore, dispositif de mise en oeuvre de ce procédé, et utilisation du procédé**

(30) Priorité: 14.04.2005 FR 0503747
(71) Demandeur: Areva NP, 92400 Courbevoie (FR)
(72) Inventeur: Dupraz, Rémy, 69100 Villeurbanne (FR); Larue, Françoise, 38500 Voiron (FR); Guiroy, Jean-Jacques, 94210 La Varenne Saint Hilaire (FR)
(74) Mandataire: Domenego, Bertrand

(57) **Abrégé**

L'invention concerne un procédé de lavage d'un flux de gaz contenant du chlore, le procédé comprenant une première étape de lavage du flux de gaz (F1) par mise en contact avec un liquide apte à fixer le chlore gazeux contenu dans le flux de gaz, la première étape étant réalisée en recyclant le liquide. Selon l'invention, la première étape de lavage est réalisée sans soutirage, de façon à concentrer le chlore dans le liquide.

## Description

L'invention concerne un procédé de lavage d'un flux de gaz, un dispositif de mise en oeuvre de ce procédé, et l'utilisation de ce procédé pour le traitement d'un flux de gaz issu de l'incinération d'éléments en graphite contenant du chlore radioactif.

Plus précisément, l'invention concerne, selon un premier aspect, un procédé de lavage d'un flux de gaz contenant du chlore, ce procédé comprenant une première étape de lavage du gaz par mise en contact avec un liquide apte à fixer le chlore gazeux contenu dans le flux de gaz, la première étape étant réalisée en recyclant le liquide.

Les procédés connus de l'état de la technique engendrent de grandes quantité d'effluents liquides, ce qui est particulièrement gênant dans le cas où le procédé est appliqué au lavage de gaz provenant de l'incinération d'éléments en graphite provenant de réacteurs nucléaires.

Ces éléments sont par exemple des chemises en graphite placées dans les réacteurs de la filière UNGG (Uranium Naturel Graphite Gaz), autour des assemblages combustibles, et servant de modérateurs.

Du fait de son séjour dans le coeur des réacteurs, le graphite contient des éléments radioactifs, tels que du carbone 14 et du chlore 36, et constituent donc un déchet radioactif, à conditionner en vue d'un stockage définitif dans un site adapté.

Dans le but de réduire le volume de déchets à stocker sur le site, il est envisagé d'incinérer le graphite. Les éléments radioactifs gazeux tels que le chlore 36 seraient libérés pendant l'opération d'incinération, et entraînés avec le flux de gaz de combustion.

De façon à limiter les rejets radioactifs dans l'environnement, il est envisagé de laver le flux de gaz de combustion avant rejet dans l'environnement, en vue de piéger le chlore 36. Le flux de gaz de combustion est mis en contact avec un liquide apte à fixer le chlore gazeux, notamment sous forme de sel, de telle sorte que le chlore 36 serait transféré du flux de gaz de combustion dans le liquide.

Les procédés de lavage connus de l'état de la technique engendrent de grandes quantités d'effluents liquides, comme précisé ci-dessus, qui doivent être traités et conditionnés en raison de la présence de chlore 36. Ces opérations sont coûteuses du fait du volume important d'effluents à traiter.

L'invention vise à résoudre ce problème en fournissant un procédé de lavage de gaz moins coûteux que celui de l'état de la technique.

A cette fin, l'invention a pour objet un procédé du type précité, caractérisé en ce que la première étape de lavage est réalisée sans soutirage, de façon à concentrer le chlore dans le liquide.

Le procédé peut également présenter une ou plusieurs des caractéristiques ci-dessous, prise(s) isolément ou considérée(s) selon toutes les combinaisons techniquement possibles :
- le procédé comprend une deuxième étape suivant la première étape, au cours de laquelle le liquide contenant le chlore concentré est solidifié dans une matrice ;
- la première étape comprend une première sous-étape de saturation du flux de gaz par aspersion à l'aide du liquide, puis une deuxième sous-étape de mise en contact du flux de gaz avec le liquide dans une colonne de lavage ;
- le flux de gaz présente une température supérieure à 150°C avant la première sous-étape de saturation, et une température inférieure à 70°C à la fin de la première sous-étape ;
- ie liquide comprend de l'eau et au moins un élément favorisant la fixation du chlore dans le liquide sous forme de sel ;
- un appoint en une solution concentrée de l'élément favorisant la fixation du chlore est réalisé dans le liquide au cours de la seconde sous-étape;
- l'élément favorisant la fixation du chlore est la soude ;
- l'élément favorisant la fixation du chlore est le bicarbonate de sodium ;
- un appoint d'eau est réalisé dans le liquide au cours de la seconde sous-étape ; et
- le liquide est refroidi pendant la première étape.

Selon un second aspect, l'invention concerne un dispositif de lavage pour la mise en oeuvre du procédé tel que décrit ci-dessus, caractérisé en ce qu'il comprend des moyens de lavage du flux de gaz par le liquide, les moyens de lavage comprenant des moyens de recyclage sans soutirage du liquide.

Le dispositif peut également présenter une ou plusieurs des caractéristiques ci-dessous, prise(s) isolément ou considérée(s) selon toutes les combinaisons techniquement possibles :
- les moyens de lavage comprennent une colonne de lavage à contre-courant verticale pourvue en partie haute de moyens d'aspersion d'un liquide apte à fixer le chlore gazeux contenu dans le flux de gaz sous forme de sel, de moyens de mise en contact du liquide avec le flux de gaz disposés sous les moyens d'aspersion, et d'un réservoir de collecte du liquide en pied de colonne, la colonne comprenant en outre une entrée de gaz médiane alimentée par le flux de gaz à traiter située entre les moyens de mise en contact et le réservoir et une sortie du flux de gaz lavé situé en tête de colonne, et les moyens de recyclage sont adaptés pour alimenter les moyens d'aspersion à partir du réservoir, sans soutirage.
- les moyens de lavage comprennent une unité de prélavage du flux de gaz par pulvérisation dudit liquide, pourvue d'une entrée du flux de gaz à traiter et d'une sortie de gaz reliée à l'entrée médiane de la colonne.

Selon un troisième aspect, l'invention concerne l'utilisation du procédé tel que décrit ci-dessus pour laver un flux de gaz issu de l'incinération d'éléments en graphite ou pour laver un flux de gaz contenant du chlore radioactif.

D'autres caractéristiques et avantages de l'invention ressortiront de la description qui en est faite ci-dessous, à titre indicatif et nullement limitatif, en référence aux figures annexées, parmi lesquelles :
- la figure 1 est une représentation schématique sous forme de blocs des principaux sous-ensembles d'une unité d'incinération d'éléments en graphite issus de réacteurs nucléaires ; et
- la figure 2 est une représentation schématique d'un dispositif de lavage de gaz selon l'invention, apte à traiter le flux de gaz de combustion issu de l'unité d'incinération de la figure 1.

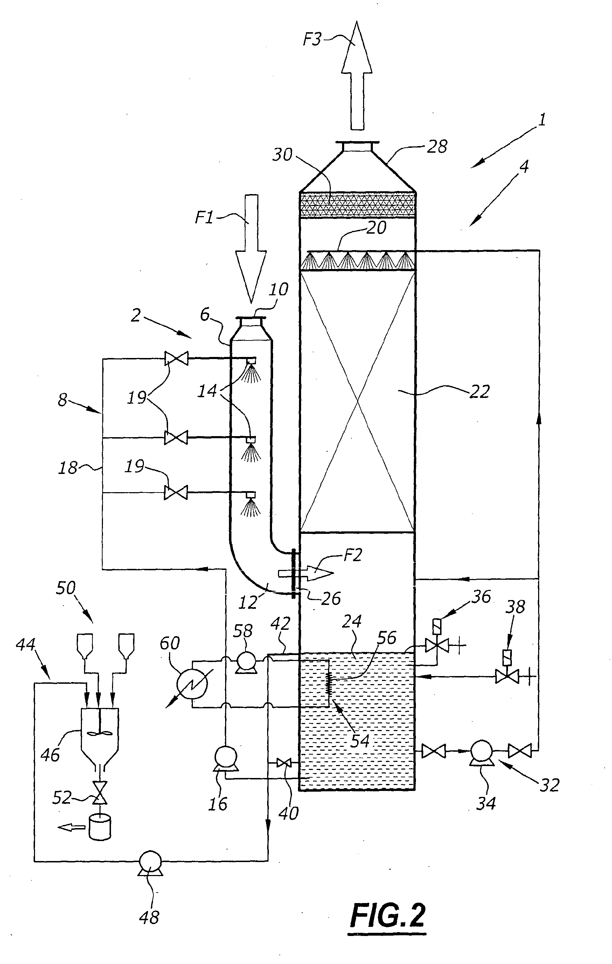

Le dispositif de lavage 1 représenté sur la figure 2 est adapté au traitement d'un flux de gaz issu d'une unité d'incinération de graphite radioactif.

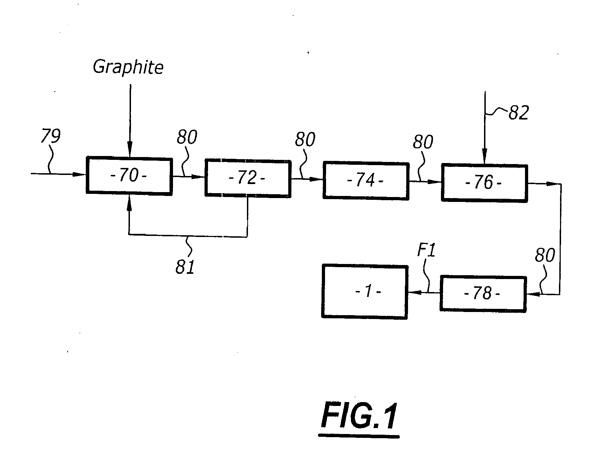

Cette unité d'incinération, représentée sur la figure 1, comprend par exemple un incinérateur à lit fluidisé 70 dans lequel sont disposés les éléments à incinérer, un cyclone 72, une chambre de post-combustion 74, des moyens 76 de refroidissement des gaz par dilution avec de l'air froid 82 ou par un échangeur de chaleur, et une batterie de filtres 78 très haute efficacité. L'incinérateur à lit fluidisé 70 comprend une entrée d'un flux 79 d'air de fluidisation du lit, et une sortie d'un flux 80 de gaz de combustion reliée au cyclone 72. Le flux 80 de gaz de combustion comprend l'air de fluidisation ainsi que les gaz résultant de l'incinération des éléments en graphite et des poussières de graphite. La majeure partie des poussières est séparée du flux de gaz à l'intérieur du cyclone 72 et recyclée dans l'incinérateur à lit fluidisé 70 (flux 81). Le flux de gaz 80 passe ensuite dans la chambre de post-combustion 74 dans laquelle la majeure partie des éléments combustibles contenus dans le flux de gaz sont brûlés, puis subit une dilution par de l'air froid 82 permettant d'amener la température du flux de gaz 80 à environ 160°C. Le flux de gaz 80 refroidi passe ensuite à travers les filtres très haute efficacité 78 qui bloquent la quasi-totalité des poussières résiduelles entraînées avec le flux de gaz. Ce sont les gaz sortant des filtres très haute efficacité 78 qui pénètrent dans le dispositif de lavage 1 pour y être lavés. Ce flux de gaz est matérialisé par la flèche F1 sur la figure.

Le dispositif de lavage 1, représenté sur la figure 2, comprend une unité 2 de prélavage du flux de gaz F1, par pulvérisation d'un liquide apte à fixer le chlore gazeux contenu dans le flux de gaz F1, et une colonne 4 de lavage du flux de gaz à contre-courant, par mise en contact du flux de gaz avec le même liquide.

Le liquide comprend de l'eau et au moins un élément apte à favoriser la fixation du chlore dans le liquide sous forme de sel.

Cet élément est de préférence de la soude ou du bicarbonate de sodium (NaHCO₃).

L'unité de prélavage 2 comprend une chambre tubulaire 6 et des moyens 8 de pulvérisation du liquide. La chambre tubulaire 6 est une tuyauterie de fort diamètre, sensiblement verticale, pourvue d'une entrée 10 pour le flux de gaz, en partie supérieure, et d'une sortie de gaz 12, en partie inférieure. Les moyens 8 de pulvérisation comprennent une pluralité de buses 14 disposées à différents niveaux verticaux à l'intérieur de la chambre tubulaire 6, une pompe 16 d'alimentation des buses 14, des tuyauteries 18 reliant la pompe 16 aux buses 14, et des vannes 19 de coupure des tuyauteries 18.

La colonne 4 est une colonne verticale, cylindrique, par exemple d'environ deux mètres de diamètre, et de six à sept mètres de hauteur. Elle comprend, de haut en bas, une rampe d'aspersion 20, des moyens 22 de mise en contact du flux de gaz F2 issu de la sortie 12 avec le liquide et un réservoir 24 de collecte du liquide en pied de colonne.

La colonne 4 comprend en outre une entrée de gaz médiane 26 communiquant avec la sortie de gaz 12 de l'unité de prélavage 2, et une sortie 28 du flux de gaz lavés F3 située en tête de colonne 4. La colonne 4 comprend encore un dévésiculeur 30 disposé au-dessus de la rampe d'aspersion 20, immédiatement sous la sortie 28 du flux de gaz lavés.

La colonne 4 comprend des moyens 32 d'alimentation de la rampe 20 en liquide à partir du réservoir 24. Ces moyens 32 comprennent une pompe 34 aspirant en un point bas du réservoir 24 et refoulant le liquide vers la rampe d'aspersion 20, des tuyauteries reliant la pompe 34 au réservoir 24 et à la rampe d'aspersion 20 et des vannes de coupure des tuyauteries. La colonne 4 comprend également des moyens 36 pour réaliser, dans le réservoir 24, un appoint en une solution concentrée de l'élément favorisant la fixation du chlore et des moyens 38 pour réaliser un appoint d'eau déminéralisée dans le réservoir 24.

La solution concentrée ajoutée dans le réservoir 24 est, suivant les cas, de la soude concentrée ou une solution de bicarbonate de sodium concentré.

Les moyens 22 de mise en contact du flux de gaz avec le liquide pulvérisé par la rampe 20 comprennent des garnissages (non représentés) empilés sur une hauteur importante entre l'entrée médiane 26 du flux de gaz à traiter F2 et la rampe d'aspersion 20.

Les garnissages 22 utilisés peuvent être par exemple des garnissages tissés, formés de différentes couches dont l'empilement, la structure, le taux de vide, les diamètres de fils, etc ..., sont étudiés au cas par cas.

Le réservoir 24 est pourvu d'une sortie de liquide 40 disposée en un point bas et d'un trop-plein de sécurité 42 disposé en un point haut, légèrement au-dessus du niveau normal de liquide dans le réservoir 24.

La pompe 16 des moyens 8 de pulvérisation aspire en un point bas du réservoir 24.

Le flux de gaz lavés F3 sortant de la colonne 4 par la sortie 28 est dirigé vers une cheminée de rejet à l'atmosphère.

Le dispositif 1 comprend encore une unité 44 de solidification du liquide tournant dans la colonne 4, une fois la campagne de lavage du flux de gaz terminée. Cette unité est typiquement une unité de cimentation, connue en soi, et comprend un malaxeur 46, des moyens 48 pour transférer des quantités déterminées de liquide depuis la sortie 40 du réservoir 24 dans le malaxeur 46, et des moyens 50 pour transférer des quantités déterminées de ciment, de chaux et éventuellement d'autres additifs dans le malaxeur 46. Le malaxeur 46 est apte à mélanger et homogénéiser le liquide, le ciment et la chaux. L'unité de cimentation 44 comprend également des moyens 52 pour couler le mélange depuis le malaxeur 46 dans un récipient approprié, par exemple un fût, et des moyens pour entreposer les fûts remplis du mélange, jusqu'à ce que ce mélange soit solidifié et forme un bloc monolithique.

La colonne 4 comprend également un groupe de frigorifique 54, ce groupe étant pourvu d'au moins un serpentin 56 immergé dans le réservoir 24, d'une pompe de circulation 58 et d'un échangeur de chaleur 60. La puissance du groupe de frigorifique 54 est de 150 kW environ.

On va maintenant décrire le procédé de lavage du flux de gaz mis en oeuvre dans le dispositif 1.

Le procédé comprend une première étape de lavage du flux de gaz, par mise en contact du flux de gaz avec le liquide et concentration du chlore dans le liquide. Le chlore gazeux réagit au contact du liquide et se transforme en un sel de chlore dissout dans le liquide. Cette première étape est organisée en une ou plusieurs campagnes, une campagne correspondant au traitement d'une quantité prédéterminée de gaz. Le procédé comprend également une seconde étape exécutée à la fin de chaque campagne. Pendant cette seconde étape, le liquide présent dans la colonne en fin de campagne et contenant le chlore concentré est solidifié dans une matrice.

La première étape se décompose en une première sous-étape de saturation du flux de gaz F1 par aspersion à l'aide du liquide dans l'unité de prélavage 2, suivie d'une deuxième sous-étape de mise en contact du flux de gaz F2 avec le liquide dans la colonne de lavage 4.

Au cours de la première sous-étape, le flux de gaz F1 entre dans l'unité de prélavage 2 par l'entrée de gaz 10, et parcourt le corps tubulaire 6 sur toute sa longueur jusqu'à la sortie de gaz 12, puis le flux de gaz F2 entre dans la colonne 4 par l'entrée médiane 26. Dans l'unité de prélavage 2, le flux de gaz F1 est refroidi et saturé en liquide, par pulvérisation du liquide à l'aide des buses 14. Ces buses sont alimentées par la pompe 16, qui prélève le liquide dans le réservoir 24.

Le liquide pulvérisé par les buses 14 s'écoule gravitairement jusqu'à la sortie de gaz 12, entre dans la colonne 4 par l'entrée médiane 26, et coule gravitairement jusqu'au réservoir 24.

Le flux de gaz F2 entrant dans la colonne 4 par l'entrée médiane 26 se dirige vers le haut jusqu'à la sortie 28. Le flux de gaz F2 traverse d'abord la section de la colonne 4 pourvue des garnissages 22. Le liquide soutiré dans le réservoir 24 par la pompe 34 et pulvérisé par la rampe d'aspersion 20 ruisselle le long des garnissages 22. Il est collecté gravitairement par le réservoir 24. Les garnissages 22 définissent entre eux de multiples passages de faible section, dans lesquels s'écoule le liquide. Le flux de gaz, en traversant ces passages, est mis intimement en contact avec le liquide, ce qui favorise la dissolution dans le liquide du chlore gazeux contenu dans le flux de gaz F2. Par ailleurs, le flux de gaz F2 ne chemine pas en ligne directe à travers les garnissages 22, mais plutôt le long d'un parcours sinueux imposé par les passages entre les garnissages 22. Il en découle que le temps de mise en contact du flux de gaz F2 avec le liquide est long, ce qui favorise la dissolution du chlore gazeux.

Le flux de gaz F2, après avoir quitté la section de la colonne pourvue de garnissages 22, traverse le dévésiculeur 30, qui piège la quasi-totalité des gouttelettes d'eau contenues dans le flux de gaz. Ces gouttelettes ruissellent le long de la colonne 4 et sont collectées dans le réservoir 24.

Pendant la campagne de lavage du flux de gaz, on peut réaliser en continu un appoint d'eau déminéralisée, par l'intermédiaire des moyens 36, dans le réservoir 24, pour compenser les pertes d'eau par évaporation.

On peut également réaliser un appoint en continu de la solution concentrée de l'élément favorisant la fixation du chlore, par l'intermédiaire des moyens 38, dans le réservoir 24. On notera que le liquide tourne en circuit fermé dans la colonne 4 et dans l'unité de prélavage 2. Le liquide alimente la rampe 20 et les buses 14 par l'intermédiaire des pompes 34 et 16, puis ruisselle jusqu'au réservoir 24.

Aucun soutirage en continu n'est réalisé dans le réservoir 24. Il en résulte que la concentration en chlore croît de façon continue dans le liquide du dispositif de lavage 1 au cours de la campagne. L'appoint en solution concentrée réalisé à l'aide des moyens 38 permet de neutraliser le chlore dans le liquide, à mesure qu'il s'accumule dans celui-ci.

Le liquide est refroidi en continu pendant la campagne de lavage du flux de gaz, à l'intérieur du réservoir 24 par le groupe frigorifique 54, si cela s'avère nécessaire. Un liquide caloporteur est mis en circulation par la pompe 58 dans le groupe frigorifique 54, se réchauffe dans le serpentin 56 en refroidissant le liquide contenu dans le réservoir 24, puis le liquide caloporteur cède sa chaleur à un fluide secondaire qui traverse l'échangeur de chaleur 60.

Le débit du flux de gaz F1 à l'entrée de l'unité de prélavage est par exemple de 20.000 Nm³/h environ. La concentration en chlore 36 dans le flux de gaz F1 est comprise entre 10 et 100 ppm, et est typiquement de 30 ppm. La température du flux de gaz F1 à l'entrée de l'unité de prélavage 2 est par exemple de 160°C environ, et la température du flux de gaz F2 en sortie de l'unité de prélavage 2 est par exemple de 60°C environ.

Le débit cumulé des buses d'aspersion 14 est par exemple de x m³/h. Le débit de liquide de la rampe d'aspersion 20 est par exemple de y m³/h.

Le volume du réservoir 24 est par exemple de 3 m³. L'appoint en eau déminéralisée est par exemple de 1,5 m³/h. Dans le cas où le liquide est de l'eau sodée, la solution concentrée est par exemple de la soude à 1 % en masse et l'appoint est par exemple de 1 l/h. Dans le cas où le liquide est de l'eau additionnée de bicarbonate de sodium, la solution concentrée est une solution de bicarbonate de sodium à par exemple 1 % en masse, et l'appoint est par exemple de 2 l/h.

On notera que, au début de chaque campagne de lavage de gaz, le réservoir 24 est rempli avec de l'eau distillée.

Une campagne de lavage correspond, par exemple, au traitement des gaz issus de l'incinération de 2000 tonnes d'éléments en graphite, comprenant une forte proportion de chemises de combustibles nucléaires.

La quantité totale de chlore 36 à piéger au cours de la campagne de lavage est d'environ 2 kg, soit environ 2 TBq.

L'efficacité du dispositif de lavage est supérieure à 90 %, ce qui signifie que plus de 90 % des molécules de chlore 36 sont piégés dans le liquide.

Au cours de la deuxième étape, le liquide est transféré du réservoir 24 à l'unité de cimentation 44, à l'aide des moyens 48 de transfert, par quantités déterminées. Après chaque transfert, des quantités déterminées de ciment et de chaux sont ajoutées dans le malaxeur 46 par des moyens 50, mélangées au liquide, et le mélange est coulé dans plusieurs fûts. Ces fûts sont entreposés jusqu'à ce que le mélange soit solidifié. En fin de campagne de lavage, le réservoir 24 contient environ 3 m³ de liquide, ces 3 m³ de liquide générant de 4 à 5 m³ de déchets cimentés après solidification.

Après vidange complète du réservoir 24 et rinçage, on remplit de nouveau ce réservoir 24 avec de l'eau distillée, et une nouvelle campagne de lavage peut commencer.

Le dispositif et le procédé décrits ci-dessus présentent de multiples avantages.

Le chlore 36 radioactif contenu dans le flux de gaz F1 est piégé à plus de 90 %. Les rejets radioactifs de l'unité d'incinération sont donc considérablement diminués.

Par ailleurs, le procédé n'engendre qu'un faible volume de liquide à conditionner : l'incinération de 2000 tonnes d'éléments en graphite, comprenant une forte proportion de chemises de combustible nucléaire, génère moins de 3 m³ de liquide à solidifier. Une fois le liquide cimenté, le volume final de déchets cimentés à entreposer est inférieur à 5 m³. Ce résultat est obtenu du fait que l'opération de lavage est effectuée en faisant recirculer le liquide en circuit fermé dans la colonne 4 et dans l'unité de prélavage 2, sans réaliser de soutirage de liquide en cours de lavage.

Dans l'état de la technique, un soutirage de liquide est effectué en continu, et un volume de liquide frais équivalent est ajouté pour compenser le soutirage. La quantité d'effluent produite est très importante.

Le dispositif de lavage selon l'invention peut présenter de multiples variantes.

Ainsi, il est possible également d'envisager, pour constituer les garnissages 22, un dispositif à venturi, qui introduit plus d'énergie dans le mélange gaz-liquide, ou une succession de plateaux ou encore des corps solides empilés en vrac.

De manière à réduire le volume de liquide à solidifier, il est possible de faire fonctionner la colonne de lavage 4 sans appoint d'eau déminéralisée pendant une période déterminée en fin de campagne de lavage, de manière à réduire par évaporation le volume de liquide dans la colonne.

Bien entendu, le dispositif de lavage et le procédé de lavage décrits ci-dessus peuvent être appliqués au traitement de gaz résultant de l'incinération d'autres produits que le graphite, contenant de faibles quantités de chlore 36, ou d'autres types de produits en graphite, par exemple des blocs constituant le coeur d'un réacteur nucléaire.

Ils peuvent aussi être appliqués au traitement de gaz issus de l'incinération de produits contenant du chlore non radioactif en traces.

Ils peuvent encore être appliqués au traitement du flux de gaz issu de la ventilation générale ou de la ventilation des zones de travail d'un bâtiment de traitement d'un matériau susceptible de relâcher du chlore radioactif. Ce bâtiment peut être par exemple dédié à la manutention et au broyage d'éléments en graphite.

Dans ce cas, le procédé peut ne pas comporter d'étape de prélavage, du fait que le flux de gaz de ventilation est froid.

L'unité de cimentation 44 peut être disposée sur le même site que la colonne de lavage 4, auquel cas les transferts de liquide entre les deux installations sont, par exemple, effectués à l'aide d'une pompe et de tuyauteries. L'unité de cimentation 44 peut également être située sur un site éloigné de la colonne 4, auquel cas le liquide est transféré entre les deux installations par des citernes.

L'unité de cimentation 44 peut également ne pas comprendre de malaxeur 46 et être de type « à pale perdue ». Chaque fût comprend alors une pale interne susceptible d'être entraînée en rotation par un groupe moteur extérieur. Le liquide, le ciment et la chaux sont transférés directement dans le fût et homogénéisé à l'aide de la pale. Une fois l'homogénéisation terminée, la pale est désaccouplée du groupe moteur et est laissée en place dans le fût.

En variante, il est possible d'ajouter du chlore inactif dans le flux de gaz à traiter, en amont du dispositif de lavage, dans le but d'augmenter l'efficacité du lavage.

## Revendications

1. Procédé de lavage d'un flux de gaz issus de l'incinération de graphite radioactif et contenant du chlore, le procédé comprenant une première étape de lavage du flux de gaz (F1) par mise en contact avec un liquide apte à fixer le chlore gazeux contenu dans le flux de gaz, la première étape étant réalisée en recyclant le liquide, **caractérisé en ce que** la première étape de lavage est réalisée sans soutirage, de façon à concentrer le chlore dans le liquide.

2. Procédé selon la revendication 1, **caractérisé en ce qu'**il comprend une deuxième étape suivant la première étape, au cours de laquelle le liquide contenant le chlore concentré est solidifié dans une matrice.

3. Procédé selon la revendication 1 ou 2, **caractérisé en ce que** la première étape comprend une première sous-étape de saturation du flux de gaz (F1) par aspersion à l'aide du liquide, puis une deuxième sous-étape de mise en contact du flux de gaz (F2) avec le liquide dans une colonne de lavage (4).

4. Procédé selon la revendication 3, **caractérisé en ce que** le flux de gaz présente une température supérieure à 150°C avant la première sous-étape de saturation, et une température inférieure à 70°C à la fin de la première sous-étape.

5. Procédé selon l'une quelconque des revendications 1 à 4, **caractérisé en ce que** le liquide comprend de l'eau et au moins un élément favorisant la fixation du chlore dans le liquide sous forme de sel.

6. Procédé selon la revendication 5, **caractérisé en ce qu'**un appoint en une solution concentrée de l'élément favorisant la fixation du chlore est réalisé dans le liquide au cours de la seconde sous-étape.

7. Procédé selon la revendication 5 ou 6, **caractérisé en ce que** l'élément favorisant la fixation du chlore est la soude.

8. Procédé selon la revendication 5 ou 6, **caractérisé en que** l'élément favorisant la fixation du chlore est le bicarbonate de sodium.

9. Procédé selon l'une quelconque des revendications 1 à 8, **caractérisé en ce qu'**un appoint d'eau est réalisé dans le liquide au cours de la seconde sous-étape.

10. Procédé selon l'une quelconque des revendications 1 à 9, **caractérisé en que** le liquide est refroidi pendant la première étape.

11. Dispositif de lavage d'un flux de gaz issus de l'incinération de graphite radioactif pour la mise en oeuvre du procédé selon l'une quelconque des revendications 1 à 10, **caractérisé en ce qu'**il comprend des moyens (4) de lavage du flux de gaz par le liquide, les moyens (4) de lavage comprenant des moyens de recyclage (32) sans soutirage du liquide.

12. Dispositif selon la revendication 11, **caractérisé en ce que** les moyens de lavage comprennent une colonne (4) de lavage à contre-courant verticale pourvue en partie haute de moyens (20) d'aspersion d'un liquide apte à fixer le chlore gazeux contenu dans le flux de gaz sous forme de sel, de moyens (22) de mise en contact du liquide avec le flux de gaz disposés sous les moyens d'aspersion (20), et d'un réservoir (24) de collecte du liquide en pied de colonne, la colonne (4) comprenant en outre une entrée de gaz médiane (26) alimentée par le flux de gaz à traiter située entre les moyens (22) de mise en contact et le réservoir (24) et une sortie (28) du flux de gaz lavé situé en tête de colonne, et **en ce que** les moyens de recyclage (32) sont adaptés pour alimenter les moyens d'aspersion (20) à partir du réservoir (24), sans soutirage.

13. Dispositif selon la revendication 11, **caractérisé en ce que** les moyens de lavage comprennent une unité (2) de prélavage du flux de gaz par pulvérisation dudit liquide, pourvue d'une entrée (10) du flux de gaz à traiter et d'une sortie (12) de gaz reliée à l'entrée médiane (26) de la colonne (4).

14. Utilisation du procédé selon l'une quelconque des revendications 1 à 10 pour laver un flux de gaz issu de l'incinération d'éléments en graphite.

15. Utilisation du procédé selon les revendications 1 à 10 pour laver un flux de gaz contenant du chlore radioactif.
